# EUROPEAN PATENT SPECIFICATION

(11) **EP 2 519 056 B1**
(45) Date of publication and mention of the grant of the patent: **19.04.2017**
(21) Application number: 10791385.7
(22) Date of filing: 24.05.2010
(51) Int. Cl.: H04W 24/04, H04W 48/08

(54) **METHOD AND SYSTEM FOR REDUCING INTERFERENCE BETWEEN BASE STATIONS IN FAILSOFT MODE**
VERFAHREN UND SYSTEM ZUR INTERFERENZREDUZIERUNG ZWISCHEN BASISSTATIONEN IM FAILSOFT-BETRIEB
PROCÉDÉ ET SYSTÈME DE RÉDUCTION D'INTERFÉRENCES ENTRE STATIONS DE BASE DANS UN MODE DÉGRADÉ

(30) Priority: 22.12.2009 CN 200910189199
(43) Date of publication of application: 31.10.2012
(73) Proprietor: ZTE Corporation, Shenzhen, Guangdong 518057 (CN)
(72) Inventor: LV, Ling, Shenzhen Guangdong 518057 (CN)
(74) Representative: Noble, Nicholas
(86) International application number: PCT/CN2010/073175
(87) International publication number: WO 2010/148879

(56) References cited:
- EP-A2- 1 018 848
- CN-A- 1 722 895
- CN-A- 1 835 609
- JP-A- 2009 239 533
- US-A- 4 180 708
- US-A- 6 128 507

## Description

### TECHNICAL FIELD

The disclosure relates to the field of communication technologies, and in particular to a method and a system for reducing interference between base stations and improving call quality in fallback mode.

### BACKGROUND

In the emergence condition when fault occurs on a link between a base station transceiver and a base station controller or a transmission link between the base station controller and network side, or in the condition that no transmission link is configured, the base station will switch to fallback mode to operate.

EP 1018848 A2 (MITSUBISHI MATERIALS CORP [JP] 12 July 2000) provides a radio communication processing unit and a recoding medium therefor, capable of, at setting or switching of a communication frequency for each of base station radio units, presenting a frequency which does not interfere with the communication frequencies being in use in the other base station units.

For example, a Code Division Multiple Access (CDMA) system is just a self-interference system, a user is interference relative to other users, and each cell could be an interference relative to other cell too, especially a neighbouring cell with the same carrier frequency. Since fault occurs on the transmission link between the fallback base station and the network side, handover is not supported. Since the overlapped area of the fallback base station and other base station use the same frequency point, interference between cells is easily caused.

Furthermore, for the entire communication system, frequent handover of a terminal in call state finally causes call drop, while the handover of a terminal in idle state to a base station in fallback mode causes the occurrence that a terminal which has a signal but can not get through.

The prior art has not well resolved the problems of interference between base stations in fallback mode and call quality of a user caused by the interference.

### SUMMARY

In order to solve the above problem, the disclosure provides a method and a system for reducing interference between base stations in fallback mode, which can reduce interference of a fallback base station on a surrounding base station and improve call quality of a terminal user.

In order to realize the above purpose, the technical solution of the disclosure is realized as follows.

The disclosure provides a method for reducing interference between base stations in fallback mode, wherein a base station subsystem changes frequency point when detecting that a current transmission link is in fallback mode.

The method that the base station subsystem detects that the current transmission link is in fallback mode may comprise one or more of the followings:
a base station transceiver periodically detects the state of a link between the base station transceiver and a base station controller;
when sending a message to a base station controller unsuccessfully, the base station transceiver detects the state of a link between the base station transceiver and the base station controller;
when waiting a base station controller message overtime, the base station transceiver detects the state of a link between the base station transceiver and the base station controller; and
when a link between a base station controller and network side has a fault, the base station controller informs the base station transceiver of the fault state of the link.

The frequency point is configured backstage in advance according to network planning situation; and
the step that the base station subsystem changes the frequency point may specifically comprise: the base station subsystem automatically changes the frequency points used by all cells of the base station.

After the step that the base station subsystem changes the frequency point, the method may further comprise:
the base station subsystem updates an overhead message and the configuration message sequence number of the overhead message;
carries information of new frequency point in a channel list message; and
carries the information of new frequency point in both extended neighbour list message and extended channel list message if the base station subsystem supports transmission of the extended neighbour list message and the extended channel list message,.

The method may further comprise: the base station subsystem sends a message carrying the information of the new frequency point through a forward paging channel to a mobile station, and the mobile station switches to the new frequency point.

The step that the mobile station switches to the new frequency point may specifically comprise:
the mobile station determines that the overhead message is updated through comparing the configuration message sequence number carried in the overhead message with the channel list message sequence number stored by the mobile station;
the mobile station updates the stored channel list message sequence number to the value of the configuration message sequence number carried in the overhead message;
if the base station subsystem supports the transmission of the extended neighbour list message and the extended channel list message, the mobile station updates corresponding information;
the mobile station determines a channel frequency point for the paging channel of the mobile station by using hash algorithm; and
the mobile station compares the frequency points calculated by the hash algorithm with the frequency points locked on previously, and switches to the new frequency point if a change occurs.

A system for reducing interference between base stations in fallback mode, comprises a base station subsystem, which is configured to change frequency point when detecting that a current transmission link is in fallback mode.

The step that the base station subsystem detects that the current transmission link is in fallback mode may comprise one or more of the followings:
a base station transceiver periodically detects the state of a link between the base station transceiver and a base station controller;
when sending a message to the base station controller unsuccessfully, the base station transceiver detects the state of a link between the base station transceiver and the base station controller;
when waiting a base station controller message overtime, the base station transceiver detects the state of a link between the base station transceiver and the base station controller; and
when a link between a base station controller and network side has a fault, the base station controller informs the base station transceiver of the fault state of the link.

The base station subsystem may be further configured to update an overhead message and the configuration message sequence number of the overhead message after changing the frequency point; carry the information of new frequency point in the channel list message; and carry the information of the new frequency point in both extended neighbour list message and extended channel list message if the base station subsystem supports transmission of the extended neighbour list message and the extended channel list message.

The system may further comprise a mobile station; wherein,
the base station subsystem may be further configured to send a message carrying the information of the new frequency point to the mobile station; and
the mobile station may be configured to switch to the new frequency point when receiving the above message.

The mobile station may be further configured to, when switching to the new frequency point, determine that the overhead message is updated through comparing the configuration message sequence number carried in the overhead message with the stored channel list message sequence number;
update the stored channel list message sequence number to the value of the configuration message sequence number carried in the overhead message;
update corresponding information if the base station subsystem supports the transmission of the extended neighbour list message and the extended channel list message;
determine a channel frequency point for the paging channel of the mobile station by using hash algorithm; and
compare the frequency point calculated by the hash algorithm with the frequency point locked on previously, and switch to the new frequency point if a change occurs.

By means of the method and the system, in the emergence condition that a link between a base station transceiver and a base station controller or a transmission link between the base station controller and the network side has a fault, or in the condition that a transmission link is not configured, when the base station subsystem switches to fallback mode to operate, interference of the fallback base station on a surrounding base station is reduced and the call quality of a terminal user is improved.

### BRIEF DESCRIPTION OF THE DRAWINGS

Fig. 1 shows a flowchart of operation of a base station subsystem in the method for improving call quality in fallback mode according to one embodiment of the disclosure;
Fig. 2 shows a flowchart of operation of a mobile station in the method for improving call quality in fallback mode according to one embodiment of the disclosure; and
Fig. 3 shows a diagram of interaction of function entities of a system for improving call quality in fallback mode according to one embodiment of the disclosure.

### DETAILED DESCRIPTION

The technical solution of the disclosure will be illustrated in detail in conjunction with the drawings and specific embodiments hereinafter.

A method for improving call quality in fallback mode provided by the disclosure can reduce interference on a surrounding base station without influencing call quality of a surrounding base station through that a base station automatically changes a frequency point when entering fallback mode and overlapped area of the fallback base station and other base station use different frequency point.

Taking a CDMA system as example, the method comprises the following steps that:
first, a base station subsystem enters fallback mode to operate when detecting that a transmission link is in fallback mode;
after entering fallback mode, the base station subsystem changes a frequency point automatically and uses a new frequency point, thereby reducing same-frequency interference on a surrounding base station;
after changing the frequency point, the base station updates and sends an overhead message; and a CDMA channel list message carries the new frequency point; and
a mobile station recalculates a locked frequency point and locks on the new frequency point when detecting that the overhead message is updated.

Through the above steps, both the fallback base station subsystem and the mobile station use the new frequency point, which reduces same-frequency interference of the fallback base station on a surrounding base station, so that the call quality of a terminal user can be improved effectively.

The method will be illustrated hereinafter in conjunction with the base station subsystem and the mobile station.

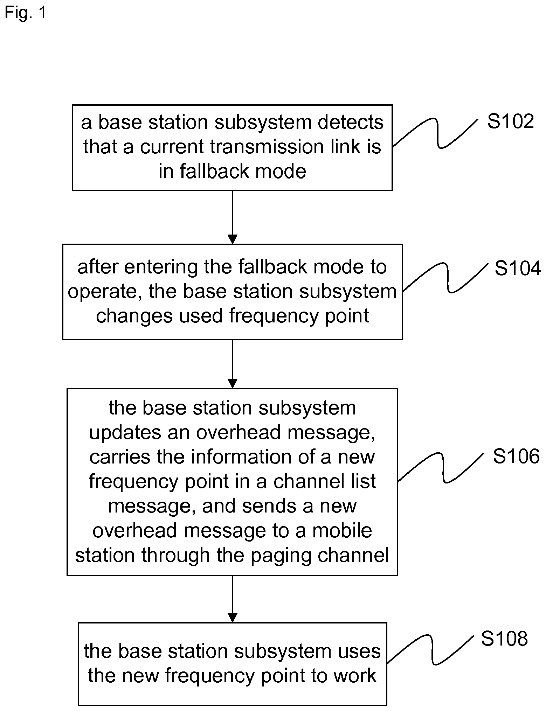

As shown in Fig. 1, the implementation steps of a base station subsystem in the method for improving call quality in fallback mode according to the disclosure comprises:
S102: a base station subsystem detects that a current transmission link is in fallback mode;
S104: the base station subsystem enters fallback mode to operate, and changes the used frequency point;
S106: the base station subsystem updates an overhead message, carries the information of a new frequency point in a channel list message, and sends the updated overhead message to a mobile station through a forward paging channel; and
S108: the base station subsystem uses the new frequency point to work.

Specifically, in the above S102, the method that the base station subsystem detects the state of the link includes but is not limited to that:
a base station transceiver periodically detects the state of a link between the base station transceiver and a base station controller;
when sending a message to a base station controller unsuccessfully, the base station transceiver detects the state of a link between the base station transceiver and the base station controller;
when waiting a message from a base station controller overtime, the base station transceiver detects the state of a link between the base station transceiver and the base station controller; and
when a link between a base station controller and network side has a fault, the base station controller informs the base station transceiver of the fault state of the link.

In the S104, when detecting that the link has a fault, the base station subsystem is notified to enter fallback mode to operate, and automatically changes the frequency points used by all cells of the base station, so as to cause no interference with frequency point used by a neighbouring base station; the frequency points can be configured backstage in advance according to network planning situation; as long as an area is overlapped with surrounding base station, the area has to be configured with a different frequency point; and the base station changes old frequency point automatically when entering fallback operation mode and uses the new frequency point in fallback mode.

In the S106, after changing to the new frequency point, the base station subsystem needs to update an overhead message to notify the mobile station to use the new frequency point; carries information of the new frequency point in the CDMA channel list message, and updates a configuration message sequence number CONFIG_MSG_SEQ; if the base station subsystem supports transmission of an extended neighbour list message and an extended CDMA channel list message, meanwhile carries the information of the new frequency point in both the extended neighbour list message and the extended CDMA channel list message, the base station subsystem sends the updated overhead message to the mobile station through a forward paging channel.

In the S108, after the updated overhead message was sent to the mobile station, both the base station subsystem and the mobile station use the new frequency point to work; the fallback base station reduces same-frequency interference on the surrounding base station through manner of changing frequency point.

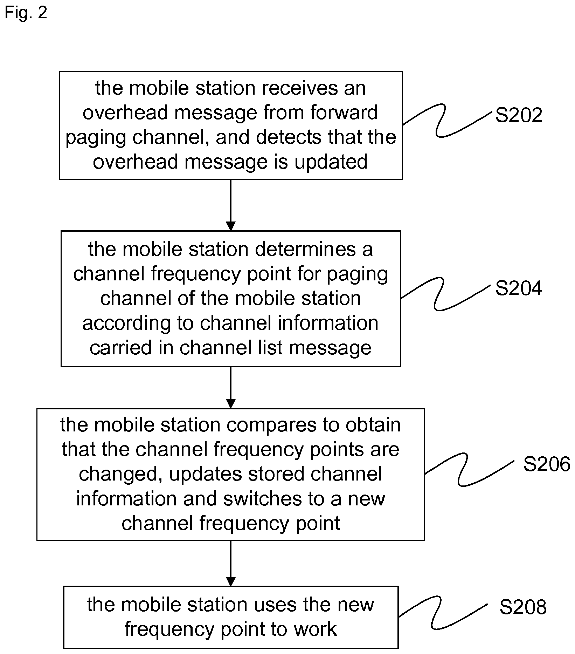

As shown in Fig. 2, the implementation steps of a mobile station in the method for improving the call quality in fallback mode according to the disclosure comprises:
S202: the mobile station receives the overhead message through the forward paging channel, and compares the configuration message sequence number CONFIG_MSG_SEQ carried in the overhead message with the channel list message sequence number CHAN_LST_MSG_SEQ stored by the mobile station; if the two message sequence numbers are different, it is determined that the overhead message is updated;
S204: the mobile station determines a CDMA channel frequency point for a paging channel of the mobile station according to channel information carried in the channel list message;
S206: the mobile station compares the frequency point calculated by hash algorithm with the frequency point locked on previously; if a change occurs, the mobile station uses and switches to new frequency point; and
S208: the mobile station uses the new frequency point to work, and monitors a forward paging message on a new paging channel.

Specifically, the above S204 comprises the following steps that:
the mobile station updates the stored channel list message sequence number CHAN_LST_MSG_SEQ to the value of the configuration message sequence number CONFIG_MSG_SEQ carried in the overhead message;
the mobile station determines CDMA channel frequency point for the paging channel of the mobile station by using hash algorithm according to the channel information in the channel list message and IMSI information of the mobile station;
if the base station subsystem supports the transmission of the extended neighbour list message and the extended channel list message, the mobile station also needs to update corresponding information;
the mobile station compares the frequency point calculated by hash algorithm with the frequency point locked on previously; if a change occurs, the mobile station uses and switches to new frequency point; and
the mobile station uses the new frequency point to work, and monitors a forward paging message on the new paging channel.

By means of the method, in the emergence condition that a link between a base station transceiver and a base station controller or a transmission link between the base station controller and network side has a fault, or in the condition that no transmission link was configured, when the base station subsystem switches to fallback mode to operate, interference of the fallback base station on a surrounding base station can be reduced effectively and the call quality of a terminal user can be improved greatly.

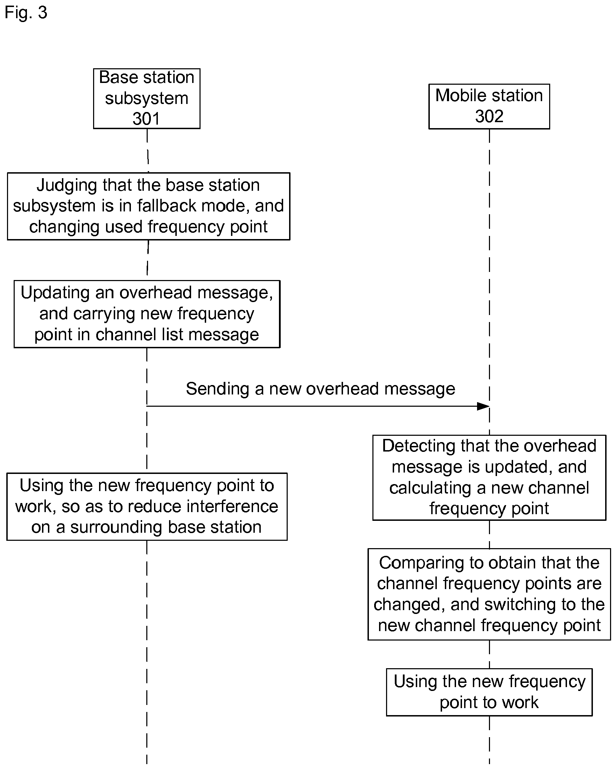

The disclosure further provides a system for improving call quality in fallback mode, taking a CDMA system as example, as shown in Fig. 3:
a base station subsystem periodically detects the state of a link, and enters fallback operation mode when detecting that the link has a fault;
the base station subsystem changes old frequency point automatically when entering fallback operation mode, and uses new frequency point in fallback mode, wherein the new frequency point causes no interference on a frequency point used by a surrounding base station;
after changing to the new frequency point, the base station subsystem updates an overhead message, and sends the updated overhead message through a forward paging channel to notify the mobile station to use the new frequency point; a CDMA channel list message, an extended neighbouring list message and an extended channel list message carry information of the new frequency point, meanwhile the configuration message sequence number CONFIG_MSG_SEQ of the overhead message is updated;
the mobile station monitors the forward paging channel; after receiving the overhead message, the mobile station compares the configuration message sequence number CONFIG_MSG_SEQ carried in the overhead message with the channel list message sequence number CHAN_LST_MSG_SEQ stored by the mobile station to determine whether the overhead message is updated;
when detecting that the overhead message is updated, the mobile station recalculates a CDMA channel frequency point for the paging channel of the mobile station;
if the frequency point calculated by the mobile station is different from the frequency point locked on previously, then the mobile station updates information of the kept frequency point and switches to the new frequency point; if the base station subsystem supports transmission of an extended neighbour list message and an extended channel list message, neighbouring information also needs to be updated; and
after the overhead message is updated, both the base station subsystem and the mobile station use the new frequency point to work, which causes no same-frequency interference on a surrounding base station.

By means of the system, in the emergence condition that a link between a base station transceiver and a base station controller or a transmission link between the base station controller and network side has a fault, or in the condition that no transmission link is configured, when the base station subsystem switches to fallback mode to operate, interference of a fallback base station on the surrounding base stations can be reduced effectively and the call quality of a terminal user can be improved greatly.

The above are only the preferred embodiments of the disclosure and are not intended to limit the disclosure. For those skilled in the art, various changes and variations can be made to the disclosure.

## Claims

1. A method for reducing interference between base stations in fallback mode, comprising:
when a link between a base station transceiver and a base station controller or a transmission link between the base station controller and the network side has a fault, or a transmission link is not configured, detecting (S102) that a current transmission link is in fallback mode by a base station subsystem;
changing (S104) frequency point and using a new frequency point by the base station subsystem;
updating (S106) an overhead message carrying the information of the new frequency point in a channel list message and a configuration message sequence number of the overhead message by the base station subsystem;
sending (S106) the overhead message carrying the information of the new frequency point in the channel list message through a forward paging channel to a mobile station by the base station subsystem; and
switching to the new frequency point by the mobile station after receiving the overhead message carrying the information of the new frequency point in the channel list message.

2. The method according to claim 1, wherein the method of detecting (S102) that the current transmission link is in fallback mode by the base station subsystem comprises one or more of the followings:
detecting the state of a link periodically between the base station transceiver and a base station controller by the base station transceiver;
detecting the state of a link between the base station transceiver and the base station controller by the base station transceiver when sending a message to the base station controller unsuccessfully;
detecting the state of a link between the base station transceiver and the base station controller by the base station transceiver when waiting a message from the base station controller overtime; and
informing the base station transceiver of the fault state of the link by the base station controller when a link between a base station controller and network side has a fault.

3. The method according to claim 1, wherein the frequency point is configured backstage in advance according to network planning situation; and
the step of changing (S104) the frequency point by the base station subsystem specifically comprises: the base station subsystem automatically changes the frequency points used by all cells of the base station.

4. The method according to any one of claims 1 to 3, wherein after the step of changing (S104) the frequency point by the base station subsystem, the method further comprises:
carrying (S106) the information of the new frequency point in both the extended neighbour list message and the extended channel list message if the base station subsystem supports transmission of an extended neighbour list message and an extended channel list message.

5. The method according to claim 1, wherein the step of switching to the new frequency point by the mobile station specifically comprises:
determining, by the mobile station, that the overhead message is updated through comparing the configuration message sequence number carried in the overhead message with the channel list message sequence number stored by the mobile station;
updating the stored channel list message sequence number to the value of the configuration message sequence number carried in the overhead message by the mobile station;
updating corresponding information by the mobile station if the base station subsystem supports the transmission of the extended neighbour list message and the extended channel list message;
determining a channel frequency point for the paging channel of the mobile station by using hash algorithm by the mobile station; and
comparing the frequency point calculated by the hash algorithm with the frequency point locked on previously by the mobile station, and switching to the new frequency point if a change occurs.

6. A system for reducing interference between base stations in fallback mode, comprising a base station subsystem (301) and a mobile station (302),
wherein the base station subsystem (301) is configured to detect that a current transmission link is in fallback mode by a base station subsystem when a link between a base station transceiver and a base station controller or a transmission link between the base station controller and the network side has a fault, or a transmission link is not configured, to change frequency point and use a new frequency point, to update an overhead message carrying the information of the new frequency point in a channel list message and a configuration message sequence number of the overhead message, and to send the overhead message carrying the information of the new frequency point in the channel list message to the mobile station (302); and
the mobile station (302) is configured to switch to the new frequency point after receiving the overhead message carrying the information of the new frequency point in the channel list message.

7. The system according to claim 6, wherein the base station subsystem (301) detects that the current transmission link is in fallback mode comprises one or more of the followings:
a base station transceiver periodically detects the state of a link between the base station transceiver and a base station controller;
when sending a message to a base station controller unsuccessfully, the base station transceiver detects the state of a link between the base station transceiver and the base station controller;
when waiting a base station controller message overtime, the base station transceiver detects the state of a link between the base station transceiver and the base station controller; and
when a link between a base station controller and network side has a fault, the base station controller informs the base station transceiver of the fault state of the link.

8. The system according to claim 6 or 7, wherein the base station subsystem (301) is further configured to carry the information of the new frequency point in both extended neighbour list message and extended channel list message if the base station subsystem supports transmission of the extended neighbour list message and the extended channel list message.

9. The system according to claim 6, wherein the mobile station (302) is further configured to, when switching to the new frequency point, determine that the overhead message is updated through comparing the configuration message sequence number carried in the overhead message with the stored channel list message sequence number;
update the stored channel list message sequence number to the value of the configuration message sequence number carried in the overhead message;
update corresponding information if the base station subsystem supports the transmission of the extended neighbour list message and the extended channel list message;
determine a channel frequency point for the paging channel of the mobile station by using hash algorithm; and
compare the frequency point calculated by the hash algorithm with the frequency point locked on previously, and switch to the new frequency point if a change occurs.

## Patentansprüche

1. Verfahren zur Interferenzreduzierung zwischen Basisstationen im Fallback-Modus, aufweisend:
wenn eine Verbindung zwischen einem Sende-Empfangs-Gerät einer Basisstation und einer Steuereinrichtung einer Basisstation oder einer Übertragungsverbindung zwischen der Steuereinrichtung der Basisstation und der Netzwerkseite einen Fehler hat oder eine Übertragungsverbindung nicht konfiguriert ist, Erkennen (S102), dass sich eine aktuelle Übertragungsverbindung im Fallback-Modus befindet, durch ein Teilsystem einer Basisstation;
Ändern (S104) des Frequenzpunktes und Benutzen eines neuen Frequenzpunktes durch das Teilsystem der Basisstation;
Aktualisieren (S106) einer Overhead-Nachricht, welche die Informationen des neuen Frequenzpunktes in einer Kanallistennachricht trägt, und einer Sequenznummer einer Konfigurationsnachricht der Overhead-Nachricht durch das Teilsystem der Basisstation;
Senden (S106) der Overhead-Nachricht, welche die Informationen des neuen Frequenzpunktes in der Kanallistennachricht trägt, durch einen Forward Paging Channel durch das Teilsystem der Basisstation an eine Mobilstation; und
Schalten zu dem neuen Frequenzpunkt durch die Mobilstation nach dem Empfang der Overhead-Nachricht, welche die Informationen des neuen Frequenzpunktes in der Kanallistennachricht trägt.

2. Verfahren nach Anspruch 1, wobei das Verfahren des Erkennens (S102) durch das Teilsystem der Basisstation, dass sich die aktuelle Übertragungsverbindung im Fallback-Modus befindet, eines oder mehr der Folgenden aufweist:
regelmäßiges Erkennen des Zustands einer Verbindung zwischen dem Sende-Empfangs-Gerät der Basisstation und der Steuereinrichtung der Basisstation durch das Sende-Empfangs-Gerät der Basisstation;
Erkennen des Zustands einer Verbindung zwischen dem Sende-Empfangs-Gerät der Basisstation und der Steuereinrichtung der Basisstation durch das Sende-Empfangs-Gerät der Basisstation, wenn eine Nachricht an die Steuereinrichtung der Basisstation erfolglos gesendet wird;
Erkennen des Zustands einer Verbindung zwischen dem Sende-Empfangs-Gerät der Basisstation und der Steuereinrichtung der Basisstation durch das Sende-Empfangs-Gerät der Basisstation, wenn eine Zeit lang auf eine Nachricht aus der Steuereinrichtung der Basisstation gewartet wird; und
Informieren des Sende-Empfangs-Geräts der Basisstation über den Fehlzustand der Verbindung durch die Steuereinrichtung der Basisstation, wenn eine Verbindung zwischen einer Steuereinrichtung der Basisstation und einer Netzwerkseite einen Fehler hat.

3. Verfahren nach Anspruch 1, wobei der Frequenzpunkt im Voraus gemäß einer Planungssituation des Netzwerks konfiguriert wird; und
der Schritt des Änderns (S104) des Frequenzpunktes durch das Teilsystem der Basisstation insbesondere Folgendes aufweist: das Teilsystem der Basisstation ändert automatisch die Frequenzpunkte, welche von allen Zellen der Basisstation benutzt werden.

4. Verfahren nach einem der Ansprüche 1 bis 3, wobei das Verfahren nach dem Schritt des Änderns (S104) des Frequenzpunktes durch das Teilsystem der Basisstation Folgendes aufweist:
Tragen (S106) der Informationen des neuen Frequenzpunktes sowohl in der erweiterten Nachbarlistennachricht als auch in der erweiterten Kanallistennachricht, wenn das Teilsystem der Basisstation die Übertragung einer erweiterten Nachbarlistennachricht und einer erweiterten Kanallistennachricht unterstützt.

5. Verfahren nach Anspruch 1, wobei der Schritt des Schaltens zu dem neuen Frequenzpunkt durch die Mobilstation insbesondere Folgendes aufweist:
Feststellen durch die Mobilstation, dass die Overhead-Nachricht aktualisiert ist, mittels des Vergleichens der Sequenznummer der Konfigurationsnachricht, welche in der Overhead-Nachricht getragen wird, mit der Sequenznummer der Kanallistennachricht, welche durch die Mobilstation gespeichert ist;
Aktualisieren durch die Mobilstation der gespeicherten Sequenznummer der Kanallistennachricht auf den Wert der Sequenznummer der Konfigurationsnachricht, welche in der Overhead-Nachricht getragen wird;
Aktualisieren der entsprechenden Informationen durch die Mobilstation, wenn das Teilsystem der Basisstation die Übertragung der erweiterten Nachbarlistennachricht und der erweiterten Kanallistennachricht unterstützt;
Feststellen eines Kanalfrequenzpunktes für den Paging Channel der Mobilstation durch Benutzung eines Hash-Algorithmus durch die Mobilstation; und
Vergleichen des Frequenzpunktes, welcher durch den Hash-Algorithmus berechnet wurde, mit dem Frequenzpunkt, welcher zuvor von der Mobilstation festgestellt wurde, und Schalten zu dem neuen Frequenzpunkt, wenn eine Änderung auftritt.

6. System zur Interferenzreduzierung zwischen Basisstationen im Fallback-Modus, ein Teilsystem (301) einer Basisstation und eine Mobilstation (302) aufweisend,
wobei das Teilsystem (301) der Basisstation zum Erkennen durch ein Teilsystem der Basisstation, dass sich eine aktuelle Übertragungsverbindung im Fallback-Modus befindet, wenn eine Verbindung zwischen einem Sende-Empfangs-Gerät einer Basisstation und einer Steuereinrichtung einer Basisstation oder einer Übertragungsverbindung zwischen der Steuereinrichtung der Basisstation und der Netzwerkseite einen Fehler hat oder eine Übertragungsverbindung nicht konfiguriert ist, zum Ändern des Frequenzpunktes und Benutzen eines neuen Frequenzpunktes, zum Aktualisieren einer Overhead-Nachricht, welche die Informationen des neuen Frequenzpunktes in einer Kanallistennachricht trägt, und einer Sequenznummer einer Konfigurationsnachricht der Overhead-Nachricht und zum Senden der Overhead-Nachricht, welche die Informationen des neuen Frequenzpunktes in der Kanallistennachricht an die Mobilstation (302) trägt, konfiguriert ist; und
die Mobilstation (302) zum Schalten zu dem neuen Frequenzpunkt nach dem Empfang der Overhead-Nachricht, welche die Informationen des neuen Frequenzpunktes in der Kanallistennachricht trägt, konfiguriert ist.

7. System nach Anspruch 6, wobei das Teilsystem (301) der Basisstation, welches erkennt, dass sich die aktuelle Übertragungsverbindung im Fallback-Modus befindet, eines oder mehr der Folgenden aufweist:
ein Sende-Empfangs-Gerät einer Basisstation, das regelmäßig den Zustand einer Verbindung zwischen dem Sende-Empfangs-Gerät der Basisstation und einer Steuereinrichtung der Basisstation erkennt;
das Sende-Empfangs-Gerät der Basisstation, das den Zustand einer Verbindung zwischen dem Sende-Empfangs-Gerät der Basisstation und der Steuereinrichtung der Basisstation erkennt, wenn eine Nachricht erfolglos an eine Steuereinrichtung der Basisstation gesendet wird;
das Sende-Empfangs-Gerät der Basisstation, das den Zustand einer Verbindung zwischen dem Sende-Empfangs-Gerät der Basisstation und der Steuereinrichtung der Basisstation erkennt, wenn eine Zeit lang auf eine Nachricht aus der Steuereinrichtung der Basisstation gewartet wird; und
die Steuereinrichtung der Basisstation, die das Sende-Empfangs-Gerät der Basisstation über den Fehlzustand der Verbindung informiert, wenn eine Verbindung zwischen einer Steuereinrichtung der Basisstation und der Netzwerkseite einen Fehler hat.

8. System nach Anspruch 6 oder 7, wobei das Teilsystem (301) der Basisstation ferner zum Tragen der Informationen des neuen Frequenzpunktes sowohl in der erweiterten Nachbarlistennachricht als auch in der erweiterten Kanallistennachricht, wenn das Teilsystem der Basisstation die Übertragung der erweiterten Nachbarlistennachricht und der erweiterten Kanallistennachricht unterstützt, konfiguriert ist.

9. Verfahren nach Anspruch 6, wobei die Mobilstation (302) ferner zum Feststellen, wenn sie zu dem neuen Frequenzpunkt geschaltet wird, dass die Overhead-Nachricht aktualisiert ist, durch das Vergleichen der Sequenznummer der Konfigurationsnachricht, welche in der Overhead-Nachricht getragen wird, mit der gespeicherten Sequenznummer der Kanallistennachricht;
zum Aktualisieren der gespeicherten Sequenznummer der Kanallistennachricht auf den Wert der Sequenznummer der Konfigurationsnachricht, welche in der Overhead-Nachricht getragen wird;
zum Aktualisieren der entsprechenden Informationen, wenn das Teilsystem der Basisstation die Übertragung der erweiterten Nachbarlistennachricht und der erweiterten Kanallistennachricht unterstützt;
zum Feststellen eines Kanalfrequenzpunktes für den Paging Channel der Mobilstation durch Benutzung eines Hash-Algorithmus; und
zum Vergleichen des Frequenzpunktes, welcher durch den Hash-Algorithmus berechnet wurde, mit dem Frequenzpunkt, welcher zuvor festgestellt wurde, und zum Schalten zu dem neuen Frequenzpunkt, wenn eine Änderung auftritt, konfiguriert ist.

## Revendications

1. Procédé de réduction de l'interférence entre des stations de base en mode de repli, comprenant :
lorsqu'une liaison entre un émetteur-récepteur de station de base et un contrôleur de station de base ou une liaison de transmission entre le contrôleur de station de base et le côté réseau présente un défaut ou lorsqu'une liaison de transmission n'est pas configurée, détecter (S102) qu'une liaison de transmission actuelle est en mode repli au moyen d'un sous-système de station de base ;
changer (S104) le point de fréquence et utiliser un nouveau point de fréquence par le sous-système de station de base ;
actualiser (S106) un message de tête portant l'information du nouveau point de fréquence dans un message de liste de canaux et un nombre de séquences de message de configuration du message de tête au moyen du sous-système de station de base ;
envoyer (S106) le message de tête transportant l'information du nouveau point de fréquence dans le message de liste de canaux à une station mobile via un canal de pagination avant au moyen du sous-système de station de base ; et
commuter sur le nouveau point de fréquence au moyen de la station mobile après réception du message de tête transportant l'information du nouveau point de fréquence dans le message de liste de canaux.

2. Procédé selon la revendication 1, dans lequel le procédé de détection (S102) que la liaison de transmission actuelle est en mode de repli au moyen du sous-système de station de base comprend une ou plusieurs des étapes suivantes consistant à :
détecter l'état d'une liaison périodiquement entre l'émetteur-récepteur de station de base et un contrôleur de station de base au moyen de l'émetteur-récepteur de station de base ;
détecter l'état d'une liaison entre l'émetteur-récepteur de station de base et le contrôleur de station de base au moyen de l'émetteur-récepteur de station de base lors de l'envoi sans succès d'un message au contrôleur de station de base ;
détecter l'état d'une liaison entre l'émetteur-récepteur de station de base et le contrôleur de station de base au moyen de l'émetteur-récepteur de station de base lorsque l'attente d'un message du contrôleur de station de base est prolongée ; et
informer l'émetteur-récepteur de la station de base de l'état défectueux de la liaison au moyen du contrôleur de station de base lorsqu'une liaison entre un contrôleur de station de base et un côté réseau présente un défaut.

3. Procédé selon la revendication 1, dans lequel le point de fréquence est configuré à l'avance en coulisse selon une situation de planification de réseau ; et
l'étape de changement (S104) du point de fréquence au moyen du sous-système de station de base comprend spécifiquement : le changement automatique de les points de fréquence, utilisés par toutes les cellules de la station de base, par le sous-système de station de base.

4. Procédé selon l'une quelconque des revendications 1 à 3, dans lequel après l'étape de changement (S104) du point de fréquence par le sous-système de station de base, le procédé comprend en outre les étapes consistant à :
transporter (S106) l'information du nouveau point de fréquence dans le message de liste de voisins étendu et dans le message de liste de canaux étendu si le sous-système de station de base appuie la transmission d'un message de liste de voisins étendu et d'un message de liste de canaux étendu,

5. Procédé selon la revendication 1, **caractérisé en ce que** l'étape de commutation sur le nouveau point de fréquence au moyen de la station mobile comprend spécifiquement les étapes consistant à:
déterminer, au moyen de la station mobile, que le message de tête est actualisé par comparaison du nombre de séquences de message de configuration transporté par le message de tête avec le nombre de séquences de message de liste de canaux stocké par la station mobile ;
actualiser le nombre de séquences de messages de liste de canaux mémorisé à la valeur du nombre de séquences de messages de configuration transporté dans le message de tête par la station mobile ;
actualiser l'information correspondante au moyen de la station mobile si le sous-système de station de base appuie la transmission du message de liste de voisins étendu et du message de liste de canaux étendu ;
déterminer un point de fréquence de canal pour le canal de pagination de la station mobile à l'aide d'un algorithme de hachage au moyen de la station mobile ; et
comparer le point de fréquence calculé par l'algorithme de hachage avec le point de fréquence bloqué précédemment au moyen la station mobile et commuter sur le nouveau point de fréquence en cas de changement.

6. Système de réduction de l'interférence entre les stations de base en mode de repli, comprenant un sous-système de station de base (301) et une station mobile (302),
le sous-système de station de base (301) étant configuré pour détecter qu'une liaison de transmission actuelle est en mode de repli au moyen d'un sous-système de station de base lorsqu'une liaison entre un émetteur-récepteur de station de base et un contrôleur de station de base ou une liaison de transmission entre le contrôleur de station de base et le réseau présente un défaut ou lorsqu'une liaison de transmission n'est pas configurée, pour changer de point de fréquence et utiliser un nouveau point de fréquence, pour actualiser un message de tête transportant l'information du nouveau point de fréquence dans un message de liste de canaux et un nombre de séquences de message de configuration du message de tête et pour envoyer le message de tête transportant l'information du nouveau point de fréquence dans le message de liste de canaux à la station mobile (302) ; et
la station mobile (302) étant configurée pour commuter sur le nouveau point de fréquence après réception du message de tête transportant l'informations du nouveau point de fréquence dans le message de liste de canaux.

7. Système selon la revendication 6, dans lequel la détection par le sous-système de station de base (301) que la liaison de transmission actuelle est en mode de repli comprend une ou plusieurs des étapes suivantes dans lesquelles :
un émetteur-récepteur de station de base détecte périodiquement l'état d'une liaison entre l'émetteur-récepteur de station de base et un contrôleur de station de base ;
lors de l'envoi sans succès d'un message à un contrôleur de station de base, l'émetteur-récepteur de station de base détecte l'état d'une liaison entre l'émetteur-récepteur de station de base et le contrôleur de station de base ;
lorsque l'attente d'un message de contrôler de station de base est prolongée, l'émetteur-récepteur de station de base détecte l'état d'une liaison entre l'émetteur-récepteur de station de base et le contrôleur de station de base ; et
lorsqu'une liaison entre un contrôleur de station de base et un côté réseau présente un défaut,
le contrôleur de station de base informe l'émetteur-récepteur de station de base de l'état défectueux de la liaison.

8. Système selon la revendication 6 ou 7, dans lequel le sous-système de station de base (301) est en outre configuré pour transporter l'information du nouveau point de fréquence dans le message de liste de voisins étendu et dans le message de liste de canaux étendu si le sous-système de station de base appuie la transmission du message de liste de voisins étendu et du message de liste de canaux étendu.

9. Système selon la revendication 6, dans lequel la station mobile (302) est en outre configurée pour, lors de la commutation sur le nouveau point de fréquence,
déterminer que le message de tête est actualisé par comparaison du nombre de séquences de message de configuration transporté dans le message de tête avec le nombre de séquences de message de liste de canaux mémorisé ;
actualiser le nombre de séquences de message de liste de canaux mémorisé à la valeur du nombre de séquences de message de configuration transporté dans le message de tête ;
actualiser l'information correspondante si le sous-système de station de base appuie la transmission du message de liste de voisins étendu et du message de liste de canaux étendu ;
déterminer un point de fréquence de canal pour le canal de pagination de la station mobile à l'aide d'un algorithme de hachage ; et
comparer le point de fréquence calculé par l'algorithme de hachage avec le point de fréquence bloqué précédemment et commuter sur le nouveau point de fréquence en cas de changement.
